# EUROPEAN PATENT SPECIFICATION

(11) **EP 2 836 353 B1**
(45) Date of publication and mention of the grant of the patent: **30.05.2018**
(21) Application number: 13718624.3
(22) Date of filing: 10.04.2013
(51) Int. Cl.: B29C 70/12, C08J 5/04, C08J 5/08, C08K 7/14, C08K 9/06, C08K 9/04, C08L 77/06, B29C 70/46, B29B 7/38, B29B 9/06, B29B 9/14, B29B 9/16, B29B 7/90, B29L 12/00, B29C 47/10, B29C 47/38, B29C 47/60

(54) **COMPOSITE MOLDING MATERIAL, SURFACE-TREATED GLASS WOOL, AND METHOD FOR MANUFACTURING COMPOSITE MOLDING MATERIAL**
VERBUNDFORMMATERIAL, OBERFLÄCHENBEHANDELTE GLASWOLLE UND VERFAHREN ZUR HERSTELLUNG EINES VERBUNDFORMMATERIALS
MATÉRIAU DE MOULAGE COMPOSITE, LAINE DE VERRE À SURFACE TRAITÉE ET PROCÉDÉ DE FABRICATION DU MATÉRIAU DE MOULAGE COMPOSITE

(30) Priority: 10.04.2012 JP 2012089067
(43) Date of publication of application: 18.02.2015
(73) Proprietor: Fujita, Masanori, Tokyo 116-0012 (JP)
(72) Inventor: FUJITA, Masanori, Tokyo 116-0012 (JP); TSUKAMOTO, Masaya, Tokyo 102-0083 (JP); MURAKAMI, Toru, Tokyo 102-0083 (JP)
(74) Representative: Winter, Brandl, Fürniss, Hübner, Röss, Kaiser, Polte - Partnerschaft mbB
(86) International application number: PCT/IB2013/000731
(87) International publication number: WO 2013/153443

(56) References cited:
- EP-A1- 1 826 242
- WO-A1-2008/022910
- WO-A1-2008/027045
- WO-A1-2009/064041
- JP-A- H10 120 900
- JP-A- 2011 183 638
- US-A- 4 048 137
- US-A1- 2008 269 375

## Description

### BACKGROUND OF THE INVENTION

### 1. Field of the Invention

The present invention relates to a composite molding material obtained by kneading glass wool into a thermoplastic resin, and a method for manufacturing a composite molding material.

### 2. Description of Related Art

Plastics have been used for various purposes because they are lightweight. However, plastics have low elastic moduli and hence are not suitable as structure materials. Thus, when a plastic is combined with a material having a high elastic modulus such as glass fibers into a composite material, it is possible to use the composite material as a lightweight and high-strength material. In addition to glass fibers, carbon fibers, resin fibers having high strength, Kevlar, Dyneema, and the like are known as reinforcing materials for forming composite materials.

Such composite materials have been used in a wide range of fields such as mechanical mechanism parts, electrical parts, airplane parts, ship parts, automobile parts, office parts, building materials, fiber products, and sundry goods. However, if fibers are non-uniformly dispersed in a resin, inconvenience such as occurrence of warpage may occur during use of a product made from the composite material. Thus, it is important to uniformly disperse the fibers in the resin.

The method for mixing and dispersing fibers into a resin is generally divided into two types. One is a method in which fibers are infiltrated into a plastic while being oriented. The other is a method in which glass fibers are dispersed into a resin.

In the former method, the fibers are previously formed into a uniform mesh shape and then infiltrated into the plastic. Thus, it is possible to uniformly disperse the fibers into the resin. However, it is generally necessary to laminate a plurality of thin fiber layers such that their fiber directions are different from each other, and a procedure of laminating a fiber layer and curing a plastic is repeated. Thus, the manufacturing cost increases.

Meanwhile, in the latter method, the number of processes is decreased since the glass fibers are kneaded into the resin, but it is a challenge to uniformly disperse the glass fibers into the resin. Fibers having a fiber diameter of about 10 to 18 µm (see Japanese Patent Application Publication No. 2009-7179 (JP 2009-7179 A)), fibers having a fiber diameter of about 10 to 20 µm (see Japanese Patent Application Publication No. 2007-277391 (JP2007-277391 A)), and the like, are known as glass fibers to be dispersed in resins. Chopped strands are generally used. The chopped strands are obtained by cutting, into a predetermined length, glass fiber obtained by collecting 50 to 200 single fibers having the above diameters.

For kneading chopped strands into a resin, the resin material and the chopped strands are heated and kneaded together with an extruder, and the resin is melted and extruded to form a product. A product is specifically manufactured by a two-step process in which resin pellets in which extruded glass fibers are uniformly dispersed are initially made, then fed to an injection molding machine, heated and kneaded within the molding machine, melted, and injected into a die to be formed into a shape, or by a one-step process in which kneading and injection molding are sequentially conducted.

Various dispersants such as silicon have been researched for uniformly dispersing glass fibers into a resin when the above chopped strands are kneaded into the resin. However, since the fiber diameter of the chopped strands ranges from 10 to 18 µm, when a resin having a fiber content of 20 to 50% is injection-molded to have a thin-walled shape (a thickness of 1 mm or less), the uniform dispersibility of the fibers is deteriorated, and there is a possibility that the surface smoothness of the injection-molded article is not favorable, for example, the surface of the injection-molded article is rugged, or the fibers appear on the surface. Particularly, since the fibers that appear on the resin surface are glass, the fibers have high hardness and serve as abrasives. Thus, there is a concern that the fibers damage an apparatus or the like. In addition, as the proportion of the chopped strands in the composite molding material is increased, the viscosity of the composite molding material during kneading increases, and thus the load on a roller or an injection nozzle of a kneader increases. In the actual manufacturing process, it is very difficult to make the fiber content in the composite molding material to be 50% or higher.

In order to solve the above problem, Japanese Patent Application Publication No. 2011-183638 (JP 2011-183638 A) describes the following techniques. (1) When glass wool having a fiber diameter of 3 to 6 µm smaller than the fiber diameter of chopped strands and having an average fiber length of about 300 to 1000 µm before being kneaded with a thermoplastic resin are surface-treated by spraying a solution containing a silane coupling agent and a film-forming agent, it is possible to disperse the glass wool into the thermoplastic resin. (2) When glass wool having a fiber length and a fiber diameter smaller than those of long glass fibers are used as a reinforcing material, molding into a thin-walled shape becomes easy, with the result that appearance defective is reduced even when an injection-molded article having a thickness of 1 mm or less is manufactured.

Glass wool is obtained by making glass, melted at a high temperature, into fine fibers. The glass wool can be produced from recycled glass, and thus allow resources to be effectively used and are also excellent in a heat insulation effect as a building material for houses.

However, since the glass wool described in JP 2011-183638 A are flocculent materials having a very small fiber diameter as compared to chopped strands, even though the glass wool has a constant average fiber length before being kneaded with a thermoplastic resin, the glass wool tends to cut when being kneaded with the thermoplastic resin. As a result, an obtained composite molding material has a drawback that it has an inferior reinforcing effect as compared to a composite molding material in which chopped strands are kneaded. Particularly, as the added amount of the glass wool is increased, the glass wool further tends to cut during kneading. Thus, there is a possibility that the glass wool in the composite molding material obtained after the glass wool is kneaded with the thermoplastic resin are finally made into a shape close to that of a glass particle.
A method for preparing surface-modified glass fibers by bonding a monolayer of an aminocalixarene derivative or an iminecalixarene derivative onto the surface of the glass fibers is disclosed in WO2009/064041 A1. The modified glass fibers are used for preparing genotyping strips which allow to immobilize oligo-DNAs having consecutive guanine bases on the modified glass fibers.

### SUMMARY OF THE INVENTION

With regard to the present invention, it is newly found that when glass wool is heated and added to a thermoplastic resin in kneading the glass wool into the thermoplastic resin, the glass wool in an obtained composite molding material is hard to cut as compared to the case where the glass wool is added without being heated, and the glass wool is dispersed in the thermoplastic resin with its fiber length kept relatively long, with the result that it is possible to improve the reinforcing effect of the composite molding material. In addition, it is newly found that when glass wool treated with calixarene as a lubricant and optionally with a silane coupling agent are used, it is possible to knead more of the glass wool in the composite molding material with its fiber length kept.

The present invention provides: a composite molding material as defined in claim 1, and a method for manufacturing a composite molding material as defined in claim 4.

The present invention relates to a composite molding material that is formed by kneading at least glass wool into a thermoplastic resin, in which the glass wool in the composite molding material has a fiber diameter of 1 to 7 µm, an average fiber length of 30 to 300 µm, and an aspect ratio of not less than 10.

The fiber diameter of the glass wool in the composite molding material may be 3 to 4 µm.

The glass wool is surface-treated with a calixarene as defined below.

The glass wool may be further surface-treated with a coupling agent.

The glass wool may be heated to a temperature that falls within the range of a temperature lower by 150°C to a temperature higher by 50°C than the temperature of the melted thermoplastic resin, and kneaded.

The glass wool may be heated to a temperature that falls within the range of a temperature lower by 100°C to a temperature higher by 20°C than the temperature of the melted thermoplastic resin, and kneaded.

The glass wool may be heated to a temperature that falls within the range of a temperature lower by 50°C to a temperature higher by 20°C than the temperature of the melted thermoplastic resin, and kneaded.

The glass wool may be heated to the same temperature as that of the melted thermoplastic resin, and kneaded.

According to the present invention the composite molding material is manufactured by a method, in which at least glass wool is kneaded into a thermoplastic resin. The method includes: heating the glass wool to a temperature that falls within the range of a temperature lower by 150°C to a temperature higher by 50°C than the temperature of the melted thermoplastic resin; and adding the heated glass wool to the melted thermoplastic resin.

The glass wool may be heated to a temperature that falls within the range of a temperature lower by 100°C to a temperature higher by 20°C than the temperature of the melted thermoplastic resin, and added to the melted thermoplastic resin.

The glass wool may be heated to a temperature that falls within the range of a temperature lower by 50°C to a temperature higher by 20°C than the temperature of the melted thermoplastic resin, and added to the melted thermoplastic resin.

The glass wool may be heated to the same temperature as that of the melted thermoplastic resin.

According to the present invention the glass wool is surface-treated with a calixarene.

The glass wool may be further surface-treated with silane coupling agent.

With the composite molding material according to the present invention, since the glass wool is heated and added to the thermoplastic resin, the glass wool added as a material are hard to cut as compared to the case where the glass wool is added without being heated, and the glass wool is dispersed in the thermoplastic resin with its fiber length kept long. Thus, the composite molding material is excellent in a reinforcing effect and flexibility, and it is possible to use the composite molding material for electronic parts formed into thin films, and the like.

In addition, since the glass wool is treated with the calixarene, and optionally with the silane coupling agent, the glass wool is hard to cut during kneading with a thermoplastic resin, and it is possible to increase the amount of the glass wool that can be kneaded into the thermoplastic resin. As a result, an obtained composite molding material has improved fire-retardant properties and has improved thermal-resistance stability when being used in an electronic device or the like. Moreover, there is a concern that distortion or the like occurs if the content of the thermoplastic resin is high, but when a large amount of the glass wool is contained, the dimensional stability is improved.

Furthermore, according to the present invention, it is possible to disperse a large amount of the glass wool in the composite molding material with its fiber length kept. Therefore, by providing a composite molding material having a high glass wool content as pellets, it is possible to knead the pellets with a thermoplastic resin that does not contain glass wool and conduct injection molding and to easily mold a product containing a desired amount of the glass wool.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a photograph substituted for a drawing and is an optical photomicrograph of glass wool after pellets produced in Example 1 was heated to 500°C to burn and eliminate nylon 66;
FIG. 2 is a photograph substituted for a drawing and is an optical photomicrograph of glass wool after pellets produced in Example 2 was heated to 500°C to burn and eliminate nylon 66;
FIG 3 is a photograph substituted for a drawing and is an optical photomicrograph of glass wool after pellets produced in Example 3 was heated to 500°C to burn and eliminate nylon 66;
FIG. 4 is a photograph substituted for a drawing and is an optical photomicrograph of glass wool after pellets produced in Example 4 was heated to 500°C to burn and eliminate nylon 66;
FIG. 5 is a photograph substituted for a drawing and is an optical photomicrograph of glass wool after pellets produced in Example 5 was heated to 500°C to burn and eliminate nylon 66;
FIG 6 is a photograph substituted for a drawing and is an optical photomicrograph of glass wool after pellets produced in Example 6 was heated to 500°C to burn and eliminate nylon 66;
FIG. 7 is a photograph substituted for a drawing and is an optical photomicrograph of glass wool after pellets produced in Reference Example 1 was heated to 500°C to burn and eliminate nylon 66;
FIG. 8 is a photograph substituted for a drawing and is an optical photomicrograph of glass wool after pellets produced in Reference Example 2 was heated to 500°C to burn and eliminate nylon 66;
FIG 9 is a photograph substituted for a drawing and is an optical photomicrograph of glass wool after pellets produced in Comparative Example 1 was heated to 500°C to burn and eliminate nylon 66;
FIG. 10 is a photograph substituted for a drawing and is an optical photomicrograph of glass wool after pellets produced in Comparative Example 2 was heated to 500°C to burn and eliminate nylon 66; and
FIG. 11 is a photograph substituted for a drawing and is a photograph of test pieces produced in Reference Examples 3 and 4, after end of a tensile strength test.

### DETAILED DESCRIPTION OF EMBODIMENTS

Hereinafter, a composite molding material, a surface-treated glass wool, and a method for manufacturing a composite molding material according to an embodiment of the present invention will be described in detail.

First, a thermoplastic resin forming the composite molding material according to the embodiment of the present invention is not particularly limited as long as it allows glass wool to be dispersed therein. Examples of the thermoplastic resin include existing thermoplastic resins, such as general-purpose plastics, engineering plastics, and super-engineering plastics. Specific examples of general-purpose plastics include polyethylene (PE), polypropylene (PP), polyvinyl chloride (PVC), polyvinylidene chloride, polystyrene (PS), polyvinyl acetate (PVAc), polytetrafluoroethylene (PTFE), acrylonitrile butadiene styrene resin (ABS resin), styrene-acrylonitrile copolymer (AS resin), and acrylic resin (PMMA). Specific examples of engineering plastics include polyamide (PA), typically, nylon, polyacetal (POM), polycarbonate (PC), modified polyphenylene ether (m-PPE, modified PPE, PPO), polybutylene terephthalate (PBT), polyethylene terephthalate (PET), syndiotactic polystyrene (SPS), and cyclic polyolefin (COP). Specific examples of super-engineering plastics include polyphenylene sulfide (PPS), polytetrafluoroethylene (PTFE), polysulfone (PSF), polyethersulfone (PES), amorphous polyarylate (PAR), polyether ether ketone (PEEK), thermoplastic polyimide (PI), and polyamideimide (PAI). These resins may be used singly, or two or more of these resins may be used in combination.

The above resins can be classified into crystalline resins and non-crystalline resins. A crystalline resin is able to improve reinforcing performance when glass wool is dispersed therein. When glass wool is dispersed in a crystalline resin such as PP, POM, PBT, PA, SPS, and PPS, it is possible to improve reinforcing performance.

In the embodiment of the present invention, the glass wool means flocculent glass fibers having a fiber diameter of 1 to 7 µm and a fiber length of 300 to 1000 µm before being kneaded with a thermoplastic resin, and are totally different from chopped strands which are obtained by cutting, into a predetermined length, glass fiber obtained by collecting 50 to 200 single fibers having a fiber diameter of 10 to 18 µm. It should be noted that in the following, the glass wool before being kneaded with the thermoplastic resin are described merely as "glass wool", and the glass wool in an obtained composite molding material after being kneaded with the thermoplastic resin is described as "glass wool in a composite molding material".

With regard to the glass wool, if the weight is the same, as the fiber diameter decreases, the surface area increases, the adhesion area to the thermoplastic resin increases, and thus the strength of an obtained composite molding material increases. On the other hand, if the fiber diameter is too small, the fibers tend to cut when being kneaded with the thermoplastic resin. In addition, the volume and the flexibility excessively increase, and it is difficult to uniformly knead the glass wool into the thermoplastic resin. Thus, the fiber diameter may be 3 to 4 µm. In addition, if the average fiber length of the glass wool is less than 300 µm, when cutting of the glass wool by a load during kneading is taken into consideration, the aspect ratio of the glass wool in the composite molding material decreases and the reinforcing effect is insufficient. If the average fiber length of the glass wool exceeds 1000 µm, dispersion of the glass wool into the thermoplastic resin is insufficient, the glass wool is entangled with each other, and air is trapped between the fibers, causing voids.

The aspect ratio of the glass wool in the composite molding material may be not less than 10 and may be not less than 15. If the aspect ratio is less than 10, a sufficient reinforcing effect is not obtained.

The glass wool is manufactured by rotating a spinner having a large number of small holes of about 1 mm in its periphery, at a high speed to emit melted glass. This manufacturing process is generally called a centrifugation method, and it is possible to economically manufacture fine glass wool of about 1 to 7 µm by adjusting the viscosity of the melted glass and the rotation speed. Other than the centrifugation method, there are a flame method and a method that is a combination of a centrifugation method and a flame method.

In addition, although the glass wool may be manufactured by the above method, a commercially available product may be used as the glass wool, and examples thereof include WR800 (average fiber diameter: 4.0 µm, average fiber length: 15 mm) manufactured by MAG-ISOVER K.K. However, as described above, if the average fiber length of the glass wool exceeds 1000 µm, dispersion of the glass wool into the thermoplastic resin is insufficient, the glass wool is entangled with each other, and air is trapped between the fibers, causing voids. Therefore, when such glass wool is used, it is necessary to adjust the average fiber length to a length of 300 to 1000 µm by drying and pulverizing the glass wool after a surface-treating agent is applied to the glass wool.

The glass wool is an inorganic material, and the thermoplastic resin is an organic material. Thus, when the glass wool is merely dispersed in the thermoplastic resin, adhesiveness between the glass wool and the thermoplastic resin is weak. Thus, after the glass wool is surface-treated with a silane coupling agent, the glass wool may be dispersed in the thermoplastic resin.

The silane coupling agent is not particularly limited, and may be determined in consideration of reactivity with the thermoplastic resin forming the composite molding material, thermal stability, and the like. Examples of the silane coupling agent include an amino silane-based coupling agent, an epoxy silane-based coupling agent, an allyl silane-based coupling agent, and a vinyl silane-based coupling agent. Commercially available products such as Z series manufactured by Dow Corning Toray Co., Ltd., KBM series and KBE series manufactured by Shin-Etsu Chemical Co., Ltd., and products manufactured by JNC Corporation may be used as these silane coupling agents.

It is possible to conduct surface treatment on the glass wool by dissolving the above silane coupling agent in a solvent, spraying the solution to the glass wool, and drying the glass wool. The weight percentage of the silane coupling agent to the glass wool may be 0.1 to 2.0 wt%, may be 0.15 to 0.4 wt%, and further may be 0.24 wt%.

In the embodiment of the present invention, the glass wool is surface-treated with a calixarene as a lubricant. The lubricant calixarene improves slip of the glass wool to allow the glass wool to be easily dispersed in the thermoplastic resin when the glass wool is kneaded into the thermoplastic resin. A generally used lubricant is silicon oil. Since silicon is oil, silicon has poor affinity with the thermoplastic resin. However, since the calixarene is a phenol resin, the calixarene improves slip of the glass wool. In addition, since the calixarene has excellent affinity with the thermoplastic resin, the calixarene allows the added amount of the glass wool in the composite molding material to be increased while the fiber length of the glass wool is kept.

The calixarene is a cyclic oligomer in which a plurality (for example, in the range of 4 to 8) of phenol units or resorcin units are bonded in a circular pattern. Examples of tetramers include a resorcin cyclic tetramer represented by the following formula (1). 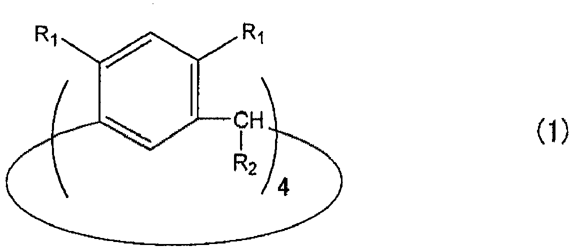 (wherein R₁ denotes a hydroxyl group, and R₂ denotes a linear alkyl group or phenyl group having 1 to 17 carbon atoms.)

In a method for manufacturing the calixarene represented by the above formula (1), resorcinol or a resorcinol derivative is caused to react with an aldehyde compound (paraformaldehyde or paraldehyde) at a predetermined mole ratio in the presence of hydrochloric acid in an ethanol or acetic acid solvent or a sulfuric acid catalyst at a predetermined temperature for several hours, whereby it is possible to synthesize a cyclic compound and a linear compound. Isolation from the synthesized products is conducted by recrystallization with methanol or the like, whereby it is possible to obtain only the calixarene. For example, a reaction shown in the following formula (2) is exemplified, and it is possible to isolate and obtain only the calixarene from the products. 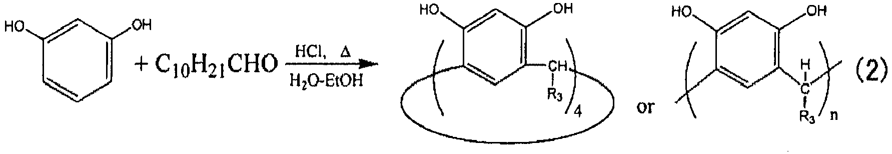 (wherein R₃ denotes C₁₀H₂₁.)

In such a method for manufacturing the calixarene, when the mole ratios of the resorcinol derivative and the aldehyde compound are made equal to each other, the calixarene may be obtained. If the amount of the aldehyde compound increases, there is a possibility that a linear product or a branched product is preferentially synthesized.

In addition, examples of hexamers include p-polyhydroxy calix[6]arene represented by the following formula (3).

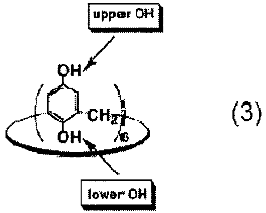

It is possible to synthesize the above p-polyhydroxy calix[6]arene by, for example, a procedure of the following formula (4), and the details thereof are described in Macromolecules 2005, 38, 6871-6875.

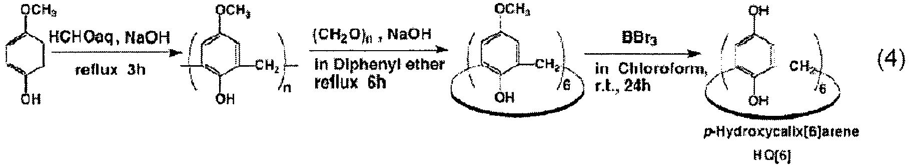

A solvent for dissolving the synthesized calixarene is not particularly limited as long as it is possible to dissolve the calixarene. Examples of the solvent include methanol, ethanol, acetone, tetrahydrofuran (THF), chloroform, dimethyl sulfoxide (DMSO), diethylene glycol (DEG), diglyme, triglyme, dioxane, methyl isobutyl ketone, methyl t-butyl ether, polyethylene glycol, toluene, xylene, methylene chloride, and diethyl ether.

The surface treatment of the glass wool is conducted by spraying a solution in which the calixarene is dissolved, to the glass wool and drying the glass wool.

The solution in which the calixarene is dissolved may be manufactured by the above manufacturing method, but for example, a plastic modifier nanodaX (registered trademark) manufactured by NANODAX CO., Ltd. may be used. The weight percentage of the plastic modifier nanodaX (registered trademark) with respect to the glass wool may be 0.001 to 0.5 wt% and maybe 0.01 to 0.3 wt%.

The glass wool may be treated with the above silane coupling agent or lubricant or may be treated with the silane coupling agent and the lubricant.

In addition to the surface treatment with the above calixarene and optionally with a silane coupling agent, the glass wool may be surface-treated with a publicly-known film-forming agent such as epoxy resin, vinyl acetate resin, vinyl acetate copolymer resin, urethane resin, or acrylic resin. These film-forming agents may be used singly, or two or more of these film-forming agents may be mixed and used. The weight percentage of the film-forming agent may be 5 to 15 times as large as that of the silane coupling agent.

The above surface treatment of the glass wool may be conducted before the glass wool is kneaded with the thermoplastic resin. Glass wool that have been surface-treated only with a lubricant may be prepared, and may be surface-treated with a desired silane coupling agent before being kneaded, depending on the thermoplastic resin to be used. Alternatively, the glass wool may be surface-treated with a lubricant and a silane coupling agent in advance, and further may be treated with a film-forming agent in advance according to need.

Additives such as publicly-known ultraviolet absorber, stabilizer, antioxidant, plasticizer, coloring agent, color adjusting agent, fire retardant, antistatic agent, fluorescent brightener, flatting agent, and impact strength modifier may be blended in the composite molding material according to the embodiment of the present invention. In other words, it is only necessary to form the composite molding material by kneading at least the glass wool into the thermoplastic resin.

It is possible to manufacture the composite molding material according to the embodiment of the present invention by melting and kneading the thermoplastic resin, the surface-treated glass wool, and various additives added according to need, at a temperature of 200 to 400°C with a publicly-known melting kneader such as a single-screw or a multiple-screw extruder, a kneader, a mixing roll, and a Banbury mixer. The manufacturing apparatus is not particularly limited, but it is simple to conduct melting and kneading with a twin-screw extruder. The kneaded composite molding material may be injection-molded directly with a die or may be formed into pellets.

In a composite molding material obtained by kneading the glass wool into the melted thermoplastic resin at normal temperature, the glass wool in the composite molding material is cut to be very short as compared to the glass wool before the kneading. In addition, when it is attempted to contain the glass wool into the composite molding material in an amount of 30% or higher, cutting of the glass wool in the composite molding material proceeds to such a degree that almost no reinforcing effect is obtained. This is because the apparent volume of the glass wool is about 20 times as large as that of the thermoplastic resin having the same weight as that of the glass wool, and the glass wool contains much air. Thus, when the glass wool is sequentially added to the melted thermoplastic resin, only a portion of the thermoplastic resin that is in contact with the added glass wool is cooled by air retained between the flocculent glass wool, and the viscosity of the portion of the thermoplastic resin changes so as to be different from that of the other thermoplastic resin portion. Then, when the thermoplastic resin is kneaded in a state where the viscosity is different, different loads are applied to the glass wool. As a result, the glass wool tends to be cut. Therefore, in order for the viscosity of the thermoplastic resin not to change even when the glass wool is added, the glass wool may be previously heated and then added.

The heating temperature of the glass wool may be set to a temperature that falls within the range of about a temperature lower by 150°C to a temperature higher by 50°C than the temperature of the melted thermoplastic resin. When the melting temperature of the thermoplastic resin is increased, the viscosity of the thermoplastic resin is decreased, and it becomes easy to disperse the glass wool. However, when the temperature of the thermoplastic resin is excessively increased, the properties of the thermoplastic resin may steeply change. Therefore, the embodiment of the present invention has such a feature that whereas the thermoplastic resin is melted at a temperature at which melting is ordinarily conducted in this field, the glass wool is heated. Although depending on the type of the used thermoplastic resin, the glass wool may be heated to about a temperature higher by 20°C than the melting temperature of the thermoplastic resin, in order to avoid deterioration of the thermoplastic resin. On the other hand, the lower limit is not particularly limited since the effect is obtained as long as heating is conducted. The lower limit may be set to about a temperature lower by 100°C and may be set to a temperature lower by 50°C, than the melting temperature of the thermoplastic resin. The glass wool may be heated to the same temperature as that of the melted resin.

Heating of the glass wool is not particularly limited as long as it is possible to heat and add the glass wool to the melted thermoplastic resin, for example, a heating device is provided at a hopper portion of the kneading apparatus to which the glass wool is loaded.

The glass wool in the composite molding material manufactured by the above method has an average fiber length of about 30 to 300 µm and an aspect ratio of 10 or greater after being cut during the kneading. In a composite molding material manufactured by a general method, even when the added amount of the glass wool in the composite molding material is small, since the apparent volume of the glass wool is about 20 times as described above, the viscosity of the thermoplastic resin tends to change, and the glass wool further tend to cut during kneading. However, in the composite molding material manufactured by the method according to the embodiment of the present invention, for example, even when the added amount of the glass wool is small and is about 10%, it is possible to disperse the glass wool in the thermoplastic resin while the fiber length of the glass wool is kept long as compared to that by the general method. Furthermore, when the glass wool surface-treated with the lubricant calixarene are used, slip of the glass wool improves. Thus, it is possible to disperse a large amount of the glass wool in the thermoplastic resin while the fiber length of the glass wool is kept further.

In the embodiment of the present invention, it is possible to incorporate the glass wool having such a length as to provide a satisfactory reinforcing effect of the composite molding material, into the composite molding material in an amount of up to about 85%. Therefore, it is possible to decrease the content of a flammable thermoplastic resin, the fire-retardant properties also very improve, and the safety of an electronic device also improves.

In addition, as described above, it is possible to disperse the glass wool in the composite molding material in an amount of up to about 85%. Thus, for example, the composite molding material containing about 85% of the glass wool is formed into pellets, a thermoplastic resin that does not contain glass wool and the pellets are kneaded, and a product is molded. Thus, it is possible to manufacture a product that contains a desired amount of the glass wool.

Hereinafter, examples will be described to specifically describe the embodiment of the present invention. However, the examples are provided for explaining the embodiment of the present invention and for reference of its specific modes. These illustrative examples are intended to explain the specific modes of the embodiment of the present invention, but not intended to limit or restrict the scope of the claims disclosed in this application.

### Production of pellets

### Example 1

Nylon 66 (LEONA 1300S, manufactured by Asahi Kasei Corporation), which is a polyamide (PA) resin, was used as a thermoplastic resin. Glass wool was manufactured by a centrifugation method, and the average fiber diameter of the glass wool was about 3.6 µm.

Surface treatment of the glass wool was conducted by spraying a solution containing a silane coupling agent and a lubricant from a binder nozzle to glass wool made from a spinner. An amino silane coupling agent S330 (manufactured by JNC Corporation) was used as the silane coupling agent, and a plastic modifier nanodaX (registered trademark) (manufactured by NANODAX CO., Ltd.) was used as the lubricant. The weight percentage of the silane coupling agent with respect to the glass wool was 0.24 wt%, and the weight percentage of the lubricant with respect to the glass wool was 0.01 wt%.

Thereafter, the glass wool was dried at 150°C for 1 hour, and then pulverized with a cutter mill to have an average fiber length of 850 µm. A same-direction twin-screw kneading extruder ZE40A ((φ 43 L/D = 40) manufactured by KraussMaffei-Berstorff Gmbh) was used as an extruder, a weight-type screw feeder S210 (manufactured by K-Tron) was used as a weighing machine, and the glass wool was added and kneaded into the melted nylon 66 such that the proportion of the glass wool in the composite molding material was 33 wt%. The kneading was conducted under the conditions of a screw rotation speed of 150 rpm, a resin pressure of 0.6 Mpa, a current of 26 to 27 A, and a feeding amount of 12 Kg/hr. In addition, the resin temperature of the nylon 66 during the kneading was 244°C, and the glass wool was heated to 100°C and added. After the kneading, pellets were produced.

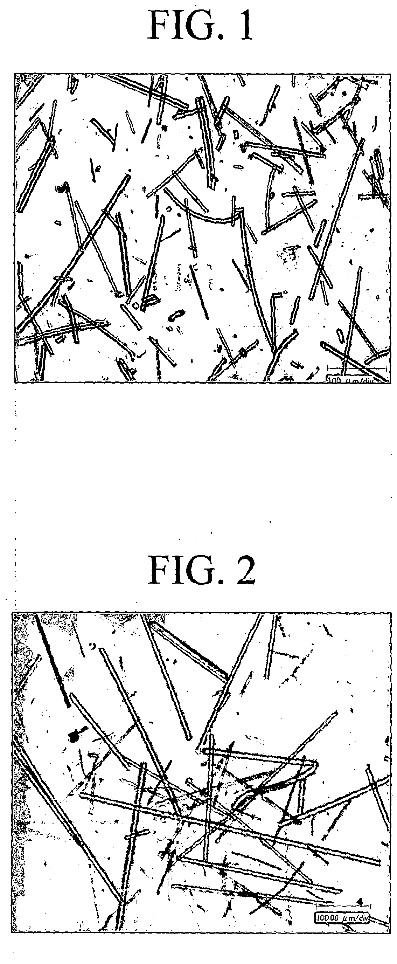

FIG. 1 is an optical photomicrograph of the glass wool after the pellets produced in Example 1 was heated to 500°C to burn and eliminate the nylon 66. The sizes of all the glass wool in the photograph was measured and simply averaged. As a result, the average fiber length of the glass wool in the composite molding material was 86.4 µm, the average fiber diameter thereof was 3.6 µm, and the aspect ratio thereof was 24.0.

### Example 2

Pellets were produced in the same manner as Example 1, except that the glass wool was heated to 200°C and added.

FIG. 2 is an optical photomicrograph of the glass wool after the pellets produced in Example 2 was heated to 500°C to burn and eliminate the nylon 66. The average fiber length of the glass wool in the composite molding material was 117.9 µm, the average fiber diameter thereof was 3.6 µm, and the aspect ratio thereof was 32.8.

### Example 3

Pellets were produced in the same manner as Example 1, except that the glass wool was heated to 200°C and added such that the proportion of the glass wool in the composite molding material was 60 wt%.

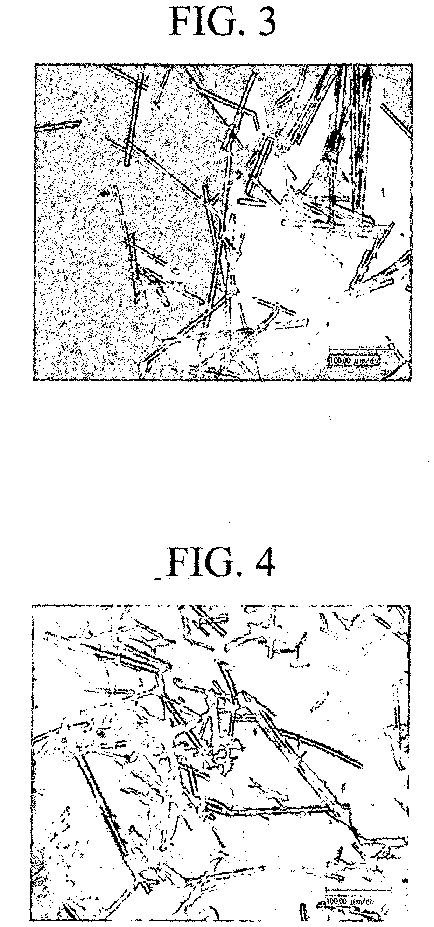

FIG 3 is an optical photomicrograph of the glass wool after the pellets produced in Example 3 was heated to 500°C to burn and eliminate the nylon 66. The average fiber length of the glass wool in the composite molding material was 79.2 µm, the average fiber diameter thereof was 3.6 µm, and the aspect ratio thereof was 22.0.

### Example 4

Pellets were produced in the same manner as Example 1, except that the glass wool was heated to 200°C and added such that the proportion of the glass wool in the composite molding material was 85 wt%.

FIG 4 is an optical photomicrograph of the glass wool after the pellets produced in Example 4 was heated to 500°C to burn and eliminate the nylon 66. The average fiber length of the glass wool in the composite molding material was 57.3 µm, the average fiber diameter thereof was 3.6 µm, and the aspect ratio thereof was 15.9.

### Example 5

Pellets were produced in the same manner as Example 2, except that the glass wool was treated with only the lubricant.

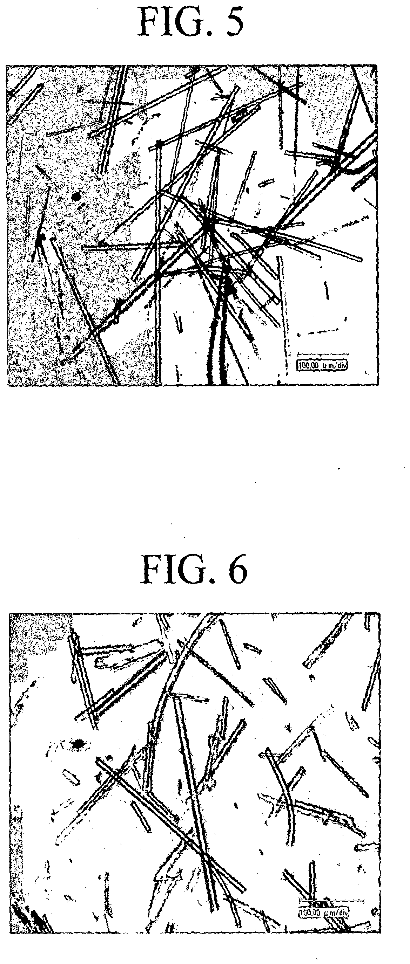

FIG. 5 is an optical photomicrograph of the glass wool after the pellets produced in Example 5 was heated to 500°C to burn and eliminate the nylon 66. The average fiber length of the glass wool in the composite molding material was 110.2 µm, the average fiber diameter thereof was 3.6 µm, and the aspect ratio thereof was 30.6.

### Example 6

Pellets were produced in the same manner as Example 4, except that the glass wool was treated with only the lubricant.

FIG. 6 is an optical photomicrograph of the glass wool after the pellets produced in Example 6 was heated to 500°C to burn and eliminate the nylon 66. The average fiber length of the glass wool in the composite molding material was 60.3 µm, the average fiber diameter thereof was 3.6 µm, and the aspect ratio thereof was 16.8.

### Reference Example 1

Pellets were produced in the same manner as Example 1, except that the glass wool was treated with only the silane coupling agent.

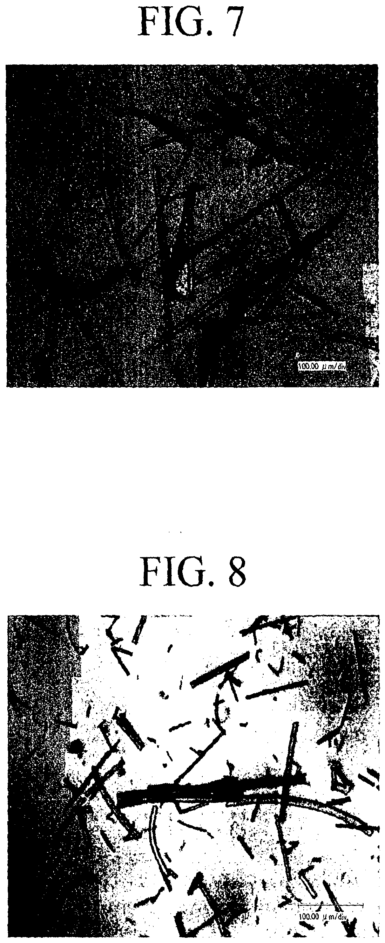

FIG. 7 is an optical photomicrograph of the glass wool after the pellets produced in Reference Example 1 was heated to 500°C to burn and eliminate the nylon 66. The average fiber length of the glass wool in the composite molding material was 66.7 µm, the average fiber diameter thereof was 3.6 µm, and the aspect ratio thereof was 18.5.

### Reference Example 2

Pellets were produced in the same manner as Example 4, except that the glass wool was treated with only the silane coupling agent.

FIG 8 is an optical photomicrograph of the glass wool after the pellets produced in Reference Example 2 was heated to 500°C to burn and eliminate the nylon 66. The average fiber length of the glass wool in the composite molding material was 37.3 µm, the average fiber diameter thereof was 3.6 µm, and the aspect ratio thereof was 10.4.

### Comparative Example 1

Pellets were produced in the same manner as Example 1, except that the glass wool was added at normal temperature (25°C) without being heated.

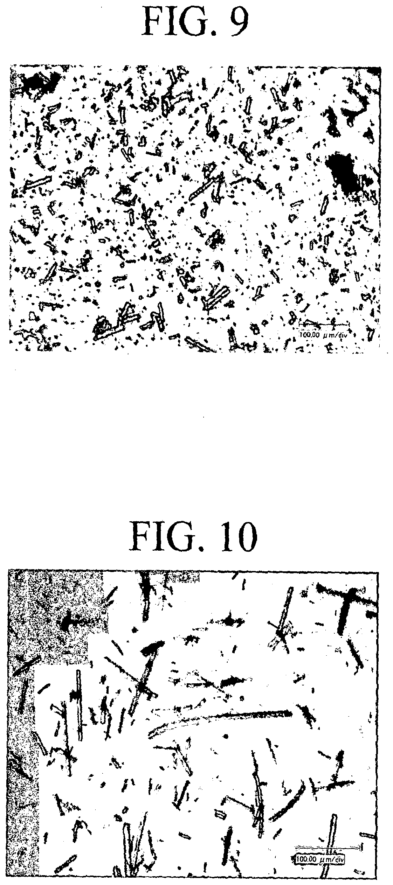

FIG. 9 is an optical photomicrograph of the glass wool after the pellets produced in Comparative Example 1 was heated to 500°C to burn and eliminate the nylon 66. The average fiber length of the glass wool in the composite molding material was 16.4 µm, the average fiber diameter thereof was 3.6 µm, and the aspect ratio thereof was 4.6.

### Comparative Example 2

Pellets were produced in the same manner as Example 1, except that the resin temperature of the nylon 66 during the kneading was 274°C and the glass wool was added at normal temperature (25°C) without being heated.

FIG. 10 is an optical photomicrograph of the glass wool after the pellets produced in Comparative Example 2 was heated to 500°C to burn and eliminate the nylon 66. The average fiber length of the glass wool in the composite molding material was 34.2 µm, the average fiber diameter thereof was 3.6 µm, and the aspect ratio thereof was 9.5.

### Comparative Example 3

Pellets were produced in the same manner as Example 1, except that the glass wool was not added.

The results of the above Examples 1 to 8 and Comparative Examples 1 to 3 are shown in Table 1.

**[Table 1]**

| | Ex. 1 | Ex.2 | Ex. 3 | Ex. 4 | Ex. 5 | Ex. 6 | Ref. Ex. 1 | Ref. Ex.2 | Comp. Ex. 1 | Comp. Ex. 2 | Comp. Ex. 3 |
|---|---|---|---|---|---|---|---|---|---|---|---|
| Resin temperature (°C) | 244 | 244 | 244 | 244 | 244 | 244 | 244 | 244 | 244 | 274 | 244 |
| Glass wool temperature (°C) | 100 | 200 | 200 | 200 | 200 | 200 | 100 | 200 | 25 | 25 | - |
| Silane coupling agent | ○ | ○ | ○ | ○ | × | × | ○ | ○ | ○ | ○ | - |
| Lubricant | ○ | ○ | ○ | ○ | ○ | ○ | × | × | ○ | ○ | - |
| Glass wool amount (wt%) | 33 | 33 | 60 | 85 | 33 | 85 | 33 | 85 | 33 | 33 | - |
| Average fiber length (µm) | 86.4 | 117.9 | 79.2 | 57.3 | 110.2 | 60.3 | 66.7 | 37.3 | 16.4 | 34.2 | - |
| Average fiber diameter (µm) | 3.6 | 3.6 | 3.6 | 3.6 | 3.6 | 3.6 | 3.6 | 3.6 | 3.6 | 3.6 | - |
| Aspect ratio | 24.0 | 32.8 | 22.0 | 15.9 | 30.6 | 16.8 | 18.5 | 10.4 | 4.6 | 9.5 | - |

As is obvious from Table 1, it is confirmed that by heating and adding the glass wool to the melted thermoplastic resin, it is possible to prevent the glass wool from being cut during the kneading and to increase the aspect ratio of the glass wool in the composite molding material. In addition, it is confirmed that even when the glass wool is added to the composite molding material in an amount of 85%, a composite molding material in which the aspect ratio is not less than 10 is obtained.

### Example 7

Polybutylene terephthalate (DURANEX XFR4840, manufactured by Polyplastics Co., Ltd.), which is a polyester resin, was used as a thermoplastic resin. Glass wool was manufactured by a centrifugation method, and the average fiber diameter of the glass wool was about 3.6 µm.

Surface treatment of the glass wool was conducted by spraying a solution containing a silane coupling agent and a film-forming agent from a binder nozzle to glass wool made from a spinner. An epoxy silane coupling agent Z4060 (manufactured by Dow Corning Toray Co., Ltd.) was used as the silane coupling agent, and an epoxy film former EM-058 (manufactured by ADEKA CORPORATION) was used as the film-forming agent. At that time, the weight percentage of the epoxy silane coupling agent with respect to the glass wool was 0.24 wt%, and the weight percentage of the film-forming agent with respect to the glass wool was 2.4 wt%.

Thereafter, the glass wool was dried at 150°C for 1 hour, and then pulverized with a cutter mill to have an average fiber length of 850 µm. A same-direction twin-screw kneading extruder ZE40A ((φ 43 L/D = 40) manufactured by KraussMaffei-Berstorff Gmbh) was used as an extruder, a weight-type screw feeder S210 (manufactured by K-Tron) was used as a weighing machine, and the glass wool was added and kneaded into the melted polybutylene terephthalate such that the proportion of the glass wool in the composite molding material was 33 wt%. The kneading was conducted under the conditions of a screw rotation speed of 120 rpm, a resin pressure of 1.0 Mpa, a current of 36 to 40 A, and a feeding amount of 15 Kg/hr. In addition, the resin temperature of the polybutylene terephthalate during the kneading was 247°C, and the glass wool was heated to 100°C and added. After the kneading, pellets were produced.

### Example 8

Pellets were produced in the same manner as Example 7, except that the glass wool was heated to 200°C and added.

### Example 9

Pellets were produced in the same manner as Example 7, except that the glass wool was heated to 200°C and added such that the proportion of the glass wool in the composite molding material was 50 wt%.

### Comparative Example 4

Pellets were produced in the same manner as Example 7, except that the glass wool was not added.

### Comparative Example 5

Pellets were produced in the same manner as Example 7, except that the glass wool was added at normal temperature (25°C) without being heated.

### Strength test

Next, the tensile strengths, bending strengths, and impact strengths of the composite molding materials produced in the above Examples 1 to 9 and Comparative Examples 1 to 5 were examined.

### Tensile strength

First, the pellets produced in the above Examples 1 to 9 and Comparative Examples 1 to 5 were pressed while being heated at the same temperature as that when the composite molding materials were produced. Then, the pressed materials were punched with a lever-type cutter to produce JIS K 7113 No. 1 tensile test pieces. The thickness of each test piece obtained was 1.2 mm and the width thereof was 6.0 mm. A universal testing machine model AG-1 manufactured by Shimadzu Corporation was used as a tensile testing machine, and the tensile strengths of the test pieces were measured under the conditions of a tension rate of 5.0 mm/min and a chuck interval of 80 mm.

### Bending strength

First, the pellets produced in the above Examples 1 to 9 and Comparative Examples 1 to 5 were injection-molded into a size of 80 × 10 × 4 mm to produce test pieces. A universal testing machine model AG-1 manufactured by Shimadzu Corporation was used as a bending testing machine, and the bending strengths of the test pieces were measured under the conditions of a fulcrum interval of 64 mm and a head speed of 5.0 mm/min.

### Impact strength

First, the pellets produced in the above Examples 1 to 9 and Comparative Examples 1 to 5 were injection-molded into a size of 80 × 10 × 4 mm (including a notch of 2 mm) to produce test pieces. A universal pendulum-type impact machine model 6545/000 manufactured by CEAST was used as an impact testing machine, and the impact strength was measured by an Izod impact method.

The strength test results of the composite molding materials produced in the above Examples 1 to 6, Reference Examples 1 and 2, and Comparative Examples 1 to 3 are shown in Table 2, and the strength test results of the composite molding materials produced in the above Examples 7 to 9 and Comparative Examples 4 and 5 are shown in Table 3.

**[Table 2]**

| | Ex. 1 | Ex. 2 | Ex. 3 | Ex. 4 | Ex. 5 | Ex. 6 | Ref. Ex. 1 | Ref, Ex. 2 | Comp. Ex. 1 | Comp. Ex. 2 | Comp. Ex. 3 |
|---|---|---|---|---|---|---|---|---|---|---|---|
| Tensile strength (Mpa) | 124.6 | 131.2 | 150.2 | 138.7 | 95.3 | 101.9 | 120.2 | 132.0 | 91.3 | 111.3 | 74.3 |
| Bending strength (Mpa) | 185.3 | 189.4 | 197.8 | 190.1 | 103.2 | 139.7 | 179.5 | 185.3 | 106.4 | 159.7 | 92.6 |
| Impact strength (kJ/m²) | 4.7 | 4.9 | 5.1 | 4.9 | 4.2 | 4.3 | 4.6 | 4.8 | 4.3 | 4.4 | 4.1 |

**[Table 3]**

| | Ex. 7 | Ex. 8 | Ex. 9 | Comp. Ex. 4 | Comp. Ex. 5 |
|---|---|---|---|---|---|
| Tensile strength (Mpa) | 84.2 | 90.6 | 93.6 | 43.7 | 71.2 |
| Bending strength (Mpa) | 215.2 | 228.6 | 238.2 | 127.3 | 186.5 |
| Impact strength (kJ/m²) | 3.9 | 4.3 | 4.6 | 3.5 | 3.7 |

As is obvious from Tables 2 and 3, since the glass wool was heated and added, the tensile strength, bending strength, and impact strength properties were considerably improved. In addition, it is confirmed that since a large amount of the glass wool was dispersed while the aspect ratio of the glass wool in the composite molding material was kept at 10 or higher, even when the glass wool was treated with only the silane coupling agent or the lubricant, the reinforcing effect was obtained. Moreover, when the glass wool that had been surface-treated with the silane coupling agent and the lubricant was used, the synergetic effect was observed in improvement of the tensile strength, the bending strength, and the impact strength. Thus, it is confirmed that the silane coupling agent and the lubricant may be used singly or in combination in consideration of the strength, the fire-retardant properties, the dimensional stability, and the like, of the composite molding material.

### Deterioration test of thermoplastic resin by heating

### Reference Example 3

A test piece was produced by the procedure in the above Tensile strength using the pellets produced in Comparative Example 3.

### Reference Example 4

Pellets were produced in the same manner as in Comparative Example 2, except that the glass wool was not added. Then, a test piece was produced by the procedure in the above Tensile strength.

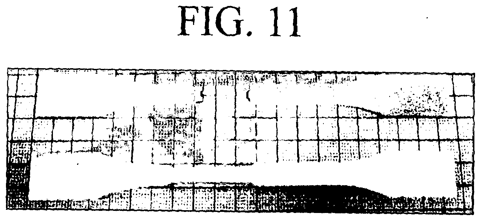

FIG. 11 is a photograph of the test pieces produced in Reference Examples 3 and 4 (the upper side is Reference Example 4, and the lower side is Reference Example 3), after the end of the test. As is obvious from FIG 11, it is confirmed that even though the thermoplastic resin was the same, there was no stretch of the broken-out section and the properties of the thermoplastic resin changed in Reference Example 4 in which the temperature during melting and kneading was higher by 30°C.

## Claims

1. A composite molding material that is formed by kneading at least glass wool into a thermoplastic resin, **characterized in that**
the glass wool in the composite molding material has a fiber diameter of 1 to 7 µm, an average fiber length of 30 to 300 µm, and an aspect ratio of not less than 10,
wherein the glass wool means flocculent glass fibers having a fiber diameter of 1 to 7 µm and a fiber length of 300 to 1000 µm before being kneaded with the thermoplastic resin and the glass wool is surface-treated with a calixarene represented by the following formula (1): 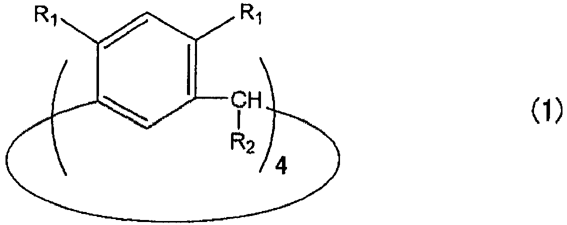 wherein R₁ denotes a hydroxyl group, and R₂ denotes a linear alkyl group or phenyl group having 1 to 17 carbon atoms.

2. The composite molding material according to claim 1, wherein the fiber diameter of the glass wool in the composite molding material is 3 to 4 µm.

3. The composite molding material according to claim 1 or 2, wherein the glass wool is further surface-treated with a silane coupling agent.

4. A method for manufacturing the composite molding material according to any one of claims 1 to 3, wherein the glass wool is heated to a temperature that falls within the range of a temperature lower by 150°C to a temperature higher by 50°C than the temperature of the melted thermoplastic resin, and kneaded.

5. The method according to claim 4, wherein the glass wool is heated to a temperature that falls within the range of a temperature lower by 100°C to a temperature higher by 20°C than the temperature of the melted thermoplastic resin, and kneaded.

6. The method according to claim 4, wherein the glass wool is heated to a temperature that falls within the range of a temperature lower by 50°C to a temperature higher by 20°C than the temperature of the melted thermoplastic resin, and kneaded.

7. The method according to claim 4, wherein the glass wool is heated to the same temperature as that of the melted thermoplastic resin, and kneaded.

## Patentansprüche

1. Verbundformmaterial, das durch Kneten von mindestens Glaswolle in ein thermoplastisches Harz gebildet wird, **dadurch gekennzeichnet, dass**
die Glaswolle in dem Verbundformmaterial einen Faserdurchmesser von 1 bis 7 µm, eine mittlere Faserlänge von 30 bis 300 µm und ein Seitenverhältnis von nicht weniger als 10 aufweist,
wobei die Glaswolle flockige Glasfasern mit einem Faserdurchmesser von 1 bis 7 µm und einer Faserlänge von 300 bis 1000 µm vor einem Kneten des thermoplastischen Harzes bedeutet und die Glaswolle mit einem Calixaren der folgenden Formel (1) oberflächenbehandelt wird: 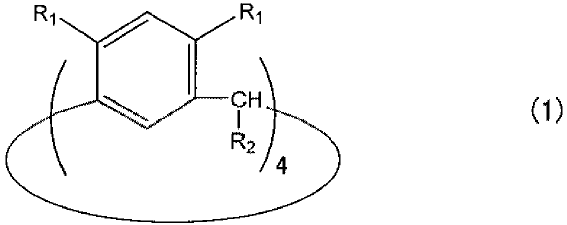 wobei R₁ eine Hydroxylgruppe bezeichnet und R₂ eine lineare Alkylgruppe oder Phenylgruppe mit 1 bis 17 Kohlenstoffatomen bezeichnet.

2. Verbundformmaterial nach Anspruch 1, wobei der Faserdurchmesser der Glaswolle in dem Verbundformmaterial 3 bis 4 µm beträgt.

3. Verbundformmaterial nach Anspruch 1 oder 2, wobei die Glaswolle ferner mit einem Silankupplungsreagens oberflächenbehandelt ist.

4. Verfahren zur Herstellung des Verbundformmaterials gemäß einem der Ansprüche 1 bis 3, wobei die Glaswolle auf eine Temperatur, die in den Bereich von einer um 150°C niedrigeren Temperatur bis zu einer um 50°C höheren Temperatur als die Temperatur des geschmolzenen thermoplastischen Harzes fällt, erwärmt und geknetet wird.

5. Verfahren nach Anspruch 4, wobei die Glaswolle auf eine Temperatur, die in den Bereich von einer um 100°C niedrigeren Temperatur bis zu einer um 20°C höheren Temperatur als die Temperatur des geschmolzenen thermoplastischen Harzes fällt, erwärmt und geknetet wird.

6. Verfahren nach Anspruch 4, wobei die Glaswolle auf eine Temperatur, die in den Bereich von einer um 50°C niedrigeren Temperatur bis zu einer um 20°C höheren Temperatur als die Temperatur des geschmolzenen thermoplastischen Harzes fällt, erwärmt und geknetet wird.

7. Verfahren nach Anspruch 4, wobei die Glaswolle auf dieselbe Temperatur wie die des geschmolzenen thermoplastischen Harzes erwärmt und geknetet wird.

## Revendications

1. Matériau de moulage composite qui est formé par malaxage d'au moins de la laine de verre dans une résine thermoplastique, **caractérisé en ce que**
la laine de verre dans le matériau de moulage composite présente un diamètre de fibre de 1 à 7 µm, une longueur moyenne de fibre de 30 à 300 µm, et un rapport d'allongement qui n'est pas inférieur à 10,
où la laine de verre indique des fibres de verre floculantes ayant un diamètre de fibre de 1 à 7 µm et une longueur de fibre de 300 à 1 000 µm avant d'être malaxée avec la résine thermoplastique et la laine de verre est traitée en surface avec un calixarène représenté par la formule (1) suivante : 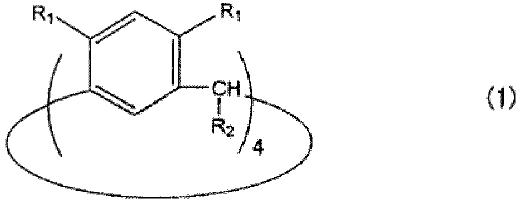 où R₁ représente un groupe hydroxyle, et R₂ représente un groupe alkyle linéaire ou un groupe phényle ayant de 1 à 17 atomes de carbone.

2. Matériau de moulage composite selon la revendication 1, où le diamètre de fibre de la laine de verre dans le matériau de moulage composite est de 3 à 4 µm.

3. Matériau de moulage composite selon la revendication 1 ou 2, où la laine de verre est encore traitée en surface avec un agent de couplage de silane.

4. Procédé de fabrication du matériau de moulage composite selon l'une quelconque des revendications 1 à 3, où la laine de verre est chauffée à une température qui se trouve dans l'intervalle d'une température inférieure de 150°C à une température supérieure de 50°C à la température de la résine thermoplastique fondue, et est malaxée.

5. Procédé selon la revendication 4, où la laine de verre est chauffée à une température qui se trouve dans l'intervalle d'une température inférieure de 100°C à une température supérieure de 20°C à la température de la résine thermoplastique fondue, et est malaxée.

6. Procédé selon la revendication 4, où la laine de verre est chauffée à une température qui se trouve dans l'intervalle d'une température inférieure de 50°C à une température supérieure de 20°C à la température de la résine thermoplastique fondue, et est malaxée.

7. Procédé selon la revendication 4, où la laine de verre est chauffée à la même température que celle de la résine thermoplastique fondue, et est malaxée.
